# EUROPÄISCHE PATENTSCHRIFT

(11) **EP 0 474 305 B1**
(45) Veröffentlichungstag und Bekanntmachung des Hinweises auf die Patenterteilung: **04.12.1996**
(21) Anmeldenummer: 91202239.9
(22) Anmeldetag: 03.09.1991
(51) Int. Cl.: H04N 9/64

(54) **Schaltungsanordnung zur A/D-Umsetzung der Farbinformationen zweier Bildsignale**
Device for A/D conversion of color information from two picture signals
Circuit pour la conversion analogique/numérique des informations de couleur de deux signaux d'image

(30) Priorität: 07.09.1990 DE 4028424
(43) Veröffentlichungstag der Anmeldung: 11.03.1992
(73) Patentinhaber: Philips Patentverwaltung GmbH, 22335 Hamburg (DE); Philips Electronics N.V., 5621 BA Eindhoven (NL)
(72) Erfinder: Treber, Hermann, W-2000 Hamburg 74 (DE); Pech, Eckhart, W-2075 Ammersbek (DE)
(74) Vertreter: von Laue, Hanns-Ulrich, Dipl.-Ing.

(56) Entgegenhaltungen:
- EP-A- 0 309 976
- GB-A- 2 109 193
- GB-A- 2 226 733
- US-A- 4 870 480
- PATENT ABSTRACTS OF JAPAN vol. 9, no. 27 (E-294)6. Februar 1985 & JP-A-59171391
- PATENT ABSTRACTS OF JAPAN vol. 11, no. 245 (E-531)11. August 1987 & JP-A-62058798

## Beschreibung

Die Erfindung betrifft eine Schaltungsanordnung zur Analog/Digital-Umsetzung zweier Farbdifferenzsignale eines ersten Bildsignals und/oder eines auf einen Träger aufmodulierten Farbsignals eines zweiten Bildsignals.

Sollen beispielsweise in einem Fernsehempfänger zwei Farbsignale verarbeitet werden, so müssen sowohl die Leuchtdichtesignale dieser Bildsignale als auch deren Farbinformationen in den digitalen Bereich umgesetzt werden. Sollen die Bilder der beiden Bildsignale z.B. flächenweise ineinander eingestanzt werden, so können die Leuchtdichtesignale beider Bildsignale wechselweise, beispielsweise mittels eines Schalters, auf einen A/D-Umsetzer gegeben werden. Bei der weiteren digitalen Signalverarbeitung dieser Leuchtdichtesignale entstehen durch das Umschalten zwischen den beiden Leuchtdichtesignalen keine Probleme. Dies ist jedoch bei der Verarbeitung insbesondere eines trägerfrequenten Farbsignals anders. Ein solches trägerfrequentes Farbsignal muß mittels eines Demodulators in das Basisband umgesetzt werden. Ein solcher Demodulator hat jedoch beträchtliche Ein- und Ausschwingvorgänge, wenn ein Signal nur zeitweise zur Verfügung steht. Ähnliche Probleme ergeben sich, wenn die Farbinformationen beider Bildsignale als trägerfrequente Farbsignale vorliegen. Es ist also erforderlich, daß in einem solchen Falle dem Demodulator des Farbsignals kontinuierlich das betreffende zu demodulierende Farbsignal zugeführt wird. Von daher ist es nicht möglich oder zumindest mit Nachteilen behaftet, vor dem A/D-Umsetzer beispielsweise zwischen den beiden Farbdifferenzsignalen des einen Bildsignals und dem auf einen Träger aufmodulierten Farbsignals des anderen Bildsignals umzuschalten. In diesem Falle würde nämlich der Demodulator nur zeitweise das trägermodulierte Farbsignal zugeführt bekommen, so daß sich nach jedem Umschaltvorgang Einschwingvorgänge ergeben, die auf einem Bildschirm deutlich sichtbar sind.

Bei bekannten Farbfernsehempfängern ist dieses Problem dadurch gelöst, daß für die Farbinformationen beider Bildsignale je ein A/D-Umsetzer vorgesehen ist. Da jedoch gerade A/D-Umsetzer einen hohen wirtschaftlichen Aufwand bedeuten, ist eine solche Lösung nicht wirtschaftlich.

Die Benutzung von nur einem A/D-Umsetzer für alle 3 Komponenten von einem Fernsehsignal ist aus GB-A-2 226 733 bekannt.

Es ist Aufgabe der Erfindung, eine Schaltungsanordnung anzugeben, die dieses Problem umgeht.

Diese Aufgabe ist erfindungsgemäß dadurch gelöst, daß ein Multiplexer vorgesehen ist, mittels dessen aus den beiden Farbdifferenzsignalen ein Zeitmultiplex-Signal generiert wird, in welchem die beiden Farbdifferenzsignale zeitlich wechselweise enthalten sind und welches in einem Addier mit dem Farbsignal zu einem Summensignal addiert wird, das einem Analog/Digital-Umsetzer zugeführt wird, dem ein Trennfilter zur Trennung des digitalen Zeitmultiplex-Signals von dem digditalen Farbsignal nachgeschaltet ist.

Es ist hier also für die gleichzeitige Analog/Digital-Umsetzung sowohl der beiden Farbdifferenzsignale des einen Bildsignals wie auch des auf einen Träger aufmodulierten Farbsignals des anderen Bildsignals nur ein Analog/Digital-Umsetzer erforderlich. Der Abtasttakt dieses Umsetzers ist auf den Frequenzbereich des trägermodulierten Farbsignals ausgelegt, der wesentlich höher liegt bzw. höher reicht als der der beiden Farbdifferenzsignale. Infolge dessen genügt für die beiden Farbdifferenzsignale eine geringere Abtastrate als für das trägermodulierte Farbsignal. Daher ist es möglich, die beiden Farbdifferenzsignale in ein Zeitmultiplex-Signal umzuwandeln, in dem wechselweise die Werte der beiden Farbdifferenzsignale auftreten. Dieses Zeitmultiplexsignal liegt bei den üblichen Fernsehnormen in einem Frequenzbereich unter 2 MHz. Das trägermodulierte Farbsignal wiederum reicht selbst mit seinen Seitenbändern maximal bis 2 MHz herunter. Somit können das Zeitmultiplex-Signal und das trägerfrequente Farbsignal im analogen Bereich überlagert bzw. addiert werden. Das dabei entstehende Summensignal wird nun dem Analog/Digital-Umsetzer zugeführt. In dem digitalen Bereich können das Zeitmultiplex-Signal und das trägerfrequente Farbdifferenzsignal durch Filter wieder voneinander getrennt werden.

Neben dem Vorteil, daß für beide Farbinformationen nur ein A/D-Umsetzer erforderlich ist, ergibt sich der weitere Vorteil, daß sich insbesondere für das trägermodulierte Farbsignal keine Verschlechterung der Auflösung ergibt, da dieses zeitlich ununterbrochen, also nicht durch einen Schalter nur zeitweise umgeschaltet, dem A/D-Umsetzer zugeführt wird. Die erfindungsgemäße Schaltungsanordnung erlaubt also die gleichzeitige Umsetzung sowohl der beiden Farbdifferenzsignale wie auch des trägerfrequenten Farbsignals ohne nennenswerte Verschlechterung der Bildqualität durch nur einen A/D-Umsetzer.

Im digitalen Bereich liegen die beiden Farbdifferenzsignale hinter dem Analog/Digital-Umsetzer bzw. hinter dem Trennfilter in Form des Zeitmultiplex-Signals vor, in welchem die Abtastwerte beider Farbdifferenzsignale wechselweise auftreten. Je nach Ausgestaltung der weiteren digitalen Signalverarbeitung können die Farbdifferenzsignale in dieser Weise weiterverarbeitet werden. Sollen die Farbdifferenzsignale wieder getrennt werden, so ist nach einer Ausgestaltung der Erfindung vorgesehen, daß dem Trennfilter ein Demultiplexer nachgeschaltet ist, in welchem die in dem digitalen Zeitmultiplex-Signal enthaltenen digitalen Farbdifferenzsignale getrennt werden.

Nach einer weiteren vorteilhaften Ausgestaltung der Erfindung ist vorgesehen, daß der Wertebereich des Analog/Digital-Umsetzers so ausgelegt ist, daß alternativ nur die beiden Farbdifferenzsignale oder nur das Farbsignal umgesetzt werden kann, daß während der Zeiten, in denen eine gleichzeitige Umsetzung aller drei Signale vorgenommen werden soll, diese Signale vor der A/D-Umsetzung mit einem Faktor 0,5 und nach der A/D-Umsetzung mit einem Faktor zwei multipliziert werden.

Die oben beschriebene erfindungsgemäße Schaltungsanordnung kann dazu verwendet werden, die Farbinformationen der beiden Bildsignale gleichzeitig in den digitalen Bereich umzusetzen. Es besteht aber natürlich auch die Möglichkeit, zu einer Zeit nur jeweils die Farbinformationen eines der Bildsignale umzusetzen, also entweder die beiden Farbdifferenzsignale oder das trägermodulierte Farbsignal. Will man für diesen Fall, in dem also nur eine der beiden Farbinformationen umgesetzt wird, den Wertebereich des Analog/Digital-Umsetzers voll ausnutzen, um ein möglichst guten Rauschabstand zu erzielen, so können dennoch wahlweise auch beide Farbinformationen gleichzeitig umgesetzt werden. Damit der Wertebereich des Analog/Digital-Umsetzers in diesem Falle nicht überschritten wird, werden dann sowohl die beiden Farbdifferenzsignale als auch das Farbsignal während der Zeiten, in denen beide verarbeitet werden sollen, vor der A/D-Umsetzung mit einem Faktor 0,5 beaufschlagt. Damit ist sichergestellt, daß das Summensignal keine größeren Werte aufweist als entweder die beiden Farbdifferenzsignale oder das Farbsignal alleine. Hinter der A/D-Umsetzung muß dieser Faktor wieder rückgängig gemacht werden, indem das digitale Signal mit einem Faktor zwei multipliziert wird.

Die Multiplikation mit dem Faktor 0,5 kann an verschiedenen Stellen vor dem A/D-Umsetzer vorgenommen werden. So ist nach einer Ausgestaltung der Erfindung vorgesehen, daß das Zeitmultiplex-Signal und das Farbsignal vor deren Addition in dem Addierer jeweils mit dem Faktor 0,5 multipliziert werden.

Entsprechendes gilt für die Rückgängigmachung dieses Faktors durch Multiplikation des digitalen Signals mit dem Faktor zwei. Gemäß einer Ausgestaltung der Erfindung ist dazu vorgesehen, daß das von dem A/D-Umsetzer gelieferte Signal in dem Trennfilter mit dem Faktor zwei multipliziert wird.

Nach einer weiteren Ausgestaltung der Erfindung ist vorgesehen, daß in dem Multiplexer das Zeitmultiplex-Signal in der Weise generiert wird, daß während jeweils zwei aufeinanderfolgenden Abtastzeitpunkten des A/D-Umsetzers das diesem zugeführte Summensignal dasselbe Farbdifferenzsignal enthält.

Die Generierung des Zeitmultiplex-Signals in dem Multiplexer muß einerseits in der Weise vorgenommen werden, daß die Werte beider Farbdifferenzsignale in dem Zeitmultiplex-Signal oft genug vertreten sind und durch den A/D-Umsetzer oft genug abgetastet werden, um das Abtasttheorem zu erfüllen. Andererseits ist es aber auch nicht wünschenswert, zu oft zwischen den beiden Farbdifferenzsignalen in dem Zeitmultiplexer umzuschalten, da sich hier mit jedem Umschaltvorgang Einschwenkvorgänge ergeben können. Es hat sich daher als vorteilhaft erwiesen, in dem Multiplexer in der Weise zwischen den beiden Farbdifferenzsignalen umzuschalten, daß für jeweils zwei aufeinanderfolgende Abtastzeitpunkte des Abtastvorganges in dem A/D-Umsetzer in dem ihm zugeführten Summensignal jeweils zwei Werte desselben Farbdifferenzsignales enthalten sind. Es ist in diesem Falle also so, daß für zwei Abtastwerte dem A/D-Umsetzer die Werte des einen Farbdifferenzsignals, für die darauffolgenden zwei Abtastwerte die Werte des anderen Farbdifferenzsignals und darauffolgend wiederum zwei Werte des ersten Farbdifferenzsignals usw. zugeführt werden. Hinter dem Trennfilter liegen also somit in dem digitalen Zeitmultiplex-Signal immer wechselweise aufeinanderfolgend zwei Werte jeweils eines Farbdifferenzsignals vor.

Für diese Art der Generierung des Zeitmultiplex-Signals ist in weiterer Ausgestaltung vorgesehen, daß nur der zu dem jeweils zweiten der aufeinanderfolgenden Abtastzeitpunkte gelieferte Wert des jeweiligen Farbdifferenzsignals im digitalen Bereich ausgewertet wird.

Da in dem digitalen Bereich jeweils aufeinanderfolgend zwei Werte jeweils eines Farbdifferenzsignals vorliegen, kann, insbesondere um durch den Multiplexer ausgelöste Einschwingvorgänge zu unterdrücken, nur jeweils der zweite Wert dieser aufeinanderfolgenden Werte in dem digitalen Bereich ausgewertet werden. Damit ist einerseits eine sichere Unterdrückung von Einschwingvorgängen möglich, andererseits ist das Abtasttheorem immer noch erfüllt.

Nach einer weiteren Ausgestaltung der Erfindung ist vorgesehen, daß für die Abtastwerte der beiden Farbdifferenzsignale eine Interpolation in der Weise vorgenommen wird, daß die Abtastwerte beider Farbdifferenzsignale für dieselben Zeitpunkte vorliegen.

Infolge der zeitlichen Verschachtelung der Werte der beiden Farbdifferenzsignale in dem Zeitmultiplex-Signal bzw. in dem Summensignal erfolgt in dem A/D-Umsetzer für die beiden Farbdifferenzsignale eine Abtastung zu verschiedenen Zeitpunkten. So werden beispielsweise zu einem ersten und zweiten Abtastzeitpunkt die Werte des einen Farbdifferenzsignals und zu den darauffolgenden dritten und vierten Zeitpunkten die des zweiten Farbdifferenzsignals abgetastet. Werden nur die jeweils zweiten Werte ausgewertet, also die an dem zweiten und vierten Abtastzeitpunkt ermittelten Werte, so sind diese Werte jedoch nicht zu zeitgleichen Abtastzeitpunkten entstanden. Es kann daher für eine Bildwiedergabe vorteilhaft sein, in dem digitalen Bereich hinter dem A/D-Umsetzer eine Interpolation der Werte der Farbdifferenzsignale vorzunehmen, bei der die Werte eines der beiden Farbdifferenzsignale auf die Abtastzeitpunkte des anderen Farbdifferenzsignals umgerechnet werden. Derartige Interpolationsfilter sind an sich bekannt.

Nach einer weiteren Ausgestaltung der Erfindung ist vorgesehen, daß für eine Verarbeitung eines RGB-Signals dem Multiplexer einer Matrix vorgeschaltet ist, welche aus dem RGB-Signal die beiden Farbdifferenzsignale und ein Helligkeitssignal gewinnt.

Wie oben erläutert, ist die erfindungsgemäße Schaltungsanordnung dazu ausgelegt, gegebenenfalls gleichzeitig sowohl zwei Farbdifferenzsignale des einen Bildsignals wie auch ein trägerfrequentes Farbsignal eines anderen Bildsignals in den digitalen Bereich umzusetzen. Die Schaltungsanordnung ist jedoch auch dazu geeignet, die Farbinformationen eines RGB-Signals einerseits sowie das trägerfrequente Farbsignal eines anderen Bildsignals andererseits gleichzeitig in den digitalen Bereich umzusetzen. Dazu wird das RGB-Signal mittels einer dem Multiplexer vorgeschalteten Matrix in ein Helligkeitssignal und die beiden anderen Farbdifferenzsignale umgewandelt.Diese beiden Farbdifferenzsignale können dann in der oben beschriebenen Weise gemeinsam mit dem trägerfrequenten Farbsignal umgesetzt werden.

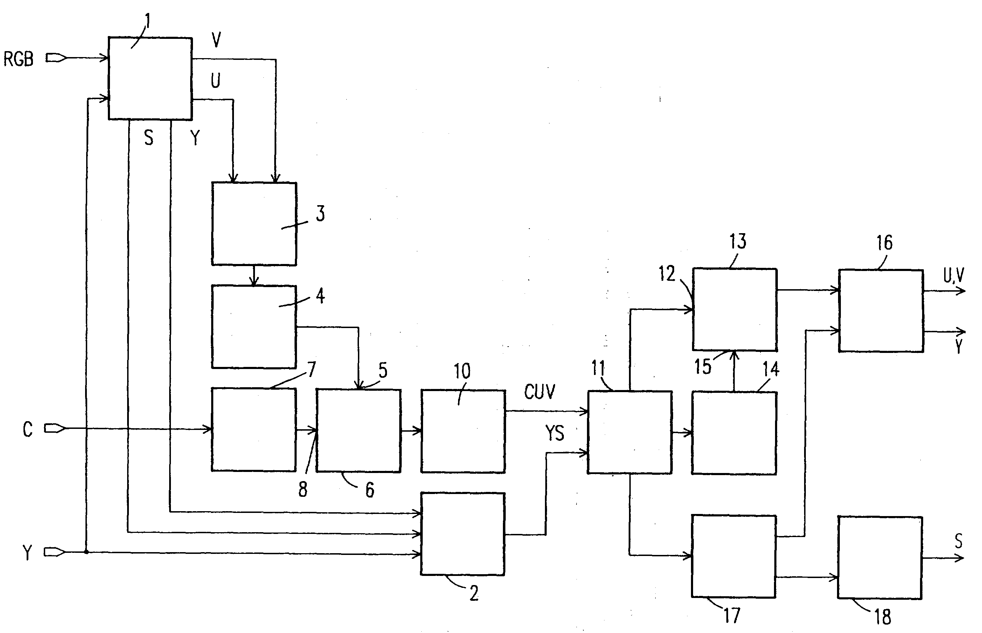

Die Erfindung wird im folgenden anhand eines in der Zeichnung dargestellten Blockschaltbildes einer Ausführungsform näher erläutert.

Der in der Figur dargestellten Schaltungsanordnung werden zwei Bildsignale zugeführt, nämlich ein RGB-Signal und ein Bildsignal, welches getrennt in Form eines Helligkeitssignals Y und eines trägerfrequenten Signals C vorliegt.

In der Figur ist nicht nur die erfindungsgemäße Schaltungsanordnung zur Analog/Digital-Umsetzung der Farbinformation dieser beiden Bildsignale dargestellt, sondern auch die Analog/Digital-Umsetzung der beiden Helligkeitssignale sowie ein Teil der weiteren Signalverarbeitung hinter dem Trennfilter der erfindungsgemäßen Schaltungsanordnung.

Bei dem RGB-Signal handelt es sich um ein Bildsignal, welches drei einzelne Signale aufweist, welche jeweils die Helligkeit der drei Farbkomponenten rot, grün und blau angeben. Diese drei Rot-, Grün- und Blausignale werden in der Schaltungsanordnung gemäß der Zeichnung einer Matrix 1 zugeführt. In dieser Matrix 1 werden die RGB-Signale in an sich bekannter Weise in ein Helligkeitssignal Y einerseits und zwei Farbdifferenzsignale U und V andererseits umgewandelt. Ferner wird in der Matrix 1 ein Synchronsignal, das für eine spätere, in der Figur nicht dargestellte Bilddarstellung erforderlich ist, gewonnen. Sowohl das Helligkeitssignal Y wie auch das Synchronsignal S werden einem A/D-Umsetzer 2 zugeführt, in welchem eine A/D-Umsetzung der Helligkeitssignale sowie der Synchronsignale vorgenommen wird. Die beiden Farbdifferenzsignale U und V, die in der Darstellung gemäß der Zeichnung von der Matrix 1 geliefert werden, können gegebenenfalls auch direkt in dieser Form geliefert werden, so daß dann selbstverständlich die Matrix 1 entfällt.

Die beiden Farbdifferenzsignale U und V werden einem Multiplexer 3 zugeführt, in welchem ein Zeitmultiplex-Signal generiert wird. Dazu wird in dem Multiplexer 3 zwischen den beiden Farbdifferenzsignalen U und V hin- und hergeschaltet, so daß in dem Zeitmultiplex-Signal wechselweise Werte der beiden Farbdifferenzsignale auftreten.

Das so generierte Zeitmultiplex-Signal wird in einem Multiplizierer 4 mit einem Faktor 0,5 multipliziert und anschließend einem ersten Eingang 5 eines Addierers 6 zugeführt.

Das Helligkeitssignal Y des anderen Bildsignals wird der Matrix 1 und dem A/D-Umsetzer 2 zugeführt. Das trägermodulierte Farbsignal dieses Bildsignals, das in der Darstellung gemäß der Figur mit C bezeichnet ist, wird zunächst in einem Multiplizierer 7 mit einem Faktor 0,5 multipliziert und nach dieser Multiplikation einem zweiten Eingang 8 des Addierers 6 zugeführt.

Die beiden Farbdifferenzsignale U und V, die in dem Multiplexer 3 in ein Zeitmultiplex-Signal umgewandelt werden, weisen einen Frequenzbereich auf, der nach oben bis maximal 2 MHz reicht. Das trägerfrequente Farbsignal C des anderen Bildsignals erreicht dagegen auch mit seinen Seitenbändern bis maximal 2 MHz herunter. Infolge der Addition dieser beiden Signale in dem Addierer 6 entsteht somit ein Signal, das quasi ein Frequenzmultiplex-Signal dieser beiden Komponenten darstellt. In dem Frequenzbereich unter 2 MHz dieses Signals treten ausschließlich Signalanteile der beiden Farbdifferenzsignale, in dem Frequenzbereich über 2 MHz dagegen ausschließlich solche des trägerfrequenten Farbsignals C auf. Dieses Summensignal wird einem A/D-Umsetzer 10 zugeführt und in diesem in den digitalen Bereich umgesetzt.

Sowohl die von dem A/D-Umsetzer 2 als auch die von dem A/D-Umsetzer 10 gelieferten digitalen Abtastwerte werden in dem digitalen Bereich der Schaltungsanordnung einem Trennfilter 11 zugeführt. In diesem Trennfilter 11 wird das von dem A/D-Umsetzer 10 gelieferte Eingangssignal mit einem Faktor zwei beaufschlagt. Ferner sind in der Figur nicht näher dargestellte Filter vorgesehen, welche die in dem von dem A/D-Umsetzer 10 gelieferten Abtastwerte in der Weise ausfiltern, daß Signalanteile unterhalb 2 MHz und Signalanteile oberhalb 2 MHz getrennt werden. Die Signalanteile unterhalb 2 MHZ stellen diejenigen der beiden Farbdifferenzsignale U und V dar und werden einem ersten Eingang 12 einer Mischanordnung 13 zugeführt. Die Signalanteile oberhalb 2 MHz stellen das in den digitalen Bereich umgesetzte trägerfrequente Farbsignal C dar, das einem Demodulator 14 zugeführt wird. In diesem Demodulator 14 wird das trägerfrequente Farbsignal in das Basisband umgesetzt und anschließend einem zweiten Eingang 15 der Mischanordnung 13 zugeführt. In der Mischanordnung 13 kann nun zwischen den ihr an dem ersten Eingang 12 zugeführten Farbdifferenzsignalen U und V bzw. dem ihr an dem zweiten Eingang 15 zugeführten, in das Basisband umgesetzten Farbsignals eine Mischung bzw. Umschaltung vorgenommen werden. Die Mischanordnung 13 liefert dann an ein Ausgangsfilter 16 ein entsprechendes Farbsignal.

In dem Trennfilter 11 wird außerdem eine Ausfilterung der von dem A/D-Umsetzer 2 gelieferten Helligkeits- und Synchronsignale vorgenommen, die einer Abtrennstufe 17 zugeführt werden, in welcher das Helligkeitssignal wieder von den Signalkomponenten des Synchronsignals abgetrennt wird. Das Helligkeitssignal wird dem Ausgangsfilter 16 zugeführt, während das Synchronsignal in einer weiteren Verarbeitungsstufe 18 weiterverarbeitet und schließlich als Synchronsignal zur weiteren Signalverarbeitung zur Verfügung steht.

Das Ausgangsfilter 16 liefert somit nun einerseits ein Helligkeitssignal Y und andererseits zwei Farbdifferenzsignale U und V. Bei diesen digitalen Signalen handelt es sich um die in gewünschter Weise gemischten digitalen Signale der beiden ursprünglich in analoger Form vorliegenden Eingangssignale, nämlich des RGB-Signals und des Y/C-Signals.

Selbstverständlich kann hinter dem Trennfilter, an dessen Ausgängen einerseits die beiden Farbdifferenzsignale und andererseits das trägerfrequente Farbsignal vorliegen, eine andere Signalverarbeitung dieser Signalkomponenten vorgenommen werden. So besteht beispielsweise die Möglichkeit, diese Signalkomponenten weiterhin getrennt zu verarbeiten.

Es hat sich als vorteilhaft erwiesen, die Abtasttakte insbesondere des A/D-Umsetzers 10 und denjenigen Umschalttakt, mit dem in dem Multiplexer 3 eine Umschaltung zwischen den beiden ihm zugeführten Farbdifferenzsignalen U und V vorgenommen wird, in der Weise auszulegen, daß in dem Multiplexer 3 nach jedem zweiten Abtasttakt des A/D-Umsetzers 10 eine Umschaltung zwischen diesen beiden Signalen erfolgt. Dies hat also zur Folge, daß bei jeweils zwei aufeinanderfolgenden Abtastvorgängen in dem A/D-Umsetzer 10 in dem diesem zugeführten Summensignal jeweils das gleiche Farbdifferenzsignal enthalten ist. In der dem A/D-Umsetzer 10 nachgeschalteten Signalverarbeitung werden dann in in der Figur nicht dargestellter Weise nur die jeweils zweiten Werte der Farbdifferenzsignale ausgewertet. Dies ist vorteilhaft, da die jeweils ersten Werte der Farbdifferenzsignale unmittelbar nach Umschaltung des Multiplexers 3 auf das jeweils andere Farbdifferenzsignal entstanden sind. Durch diese Umschaltvorgänge können jedoch Einschwingvorgänge entstehen, die durch ausschließliche Auswertung der jeweils zweiten Abtastwerte unterdrückt werden.

Gemäß der bisherigen Beschreibung wurde davon ausgegangen, daß der Analog/Digital-Umsetzer 10 bezüglich seines Wertebereiches nur auf die Verarbeitung entweder der beiden Farbdifferenzsignale U und V oder des trägerfrequenten Farbsignals C ausgelegt ist. Damit bei gleichzeitiger Verarbeitung dieser Signale keine Übersteuerung des A/D-Umsetzers 10 erfolgt, sind die beiden Multiplizierer 4 und 7 vorgesehen. In dem Trennfilter 11 wird in diesem Falle wieder eine Korrektur der digitalen Werte vorgenommen. Diese Auslegung des Wertebereichs des A/D-Umsetzers bietet den Vorteil, daß, wenn eine A/D-Umsetzung entweder nur der beiden Farbdifferenzsignale oder nur des Farbsignals erfolgen soll, der Wertebereich des A/D-Umsetzers 10 auch in diesem Falle voll ausgenutzt wird. In diesem Falle werden die Multiplizierer 4 und 7 ausgeschaltet. Ferner wird in dem Trennfilter das digitale Signal nicht mehr mit einem Faktor zwei beaufschlagt. Der Vorteil dieser Lösung besteht darin, daß somit auch für die Verarbeitung nur entweder der beiden Farbdifferenzsignale oder der trägerfrequenten Farbsignals der Wertebereich des A/D-Umsetzers voll genutzt werden kann, so daß ein maximal möglicher Rauschabstand der digitalen Werte zur Verfügung steht.

Selbstverständlich besteht auch die Möglichkeit, den A/D-Umsetzer 10 so auszulegen, daß er für die gleichzeitige Verarbeitung sowohl der Farbdifferenzsignale wie auch des trägerfrequenten Farbsignals geeignet ist. In diesem Falle können die beiden Multiplizierer 4 und 7 sowie die Multiplizierer 2 in der Trennstufe 11 wegfallen. Soll mittels einer solchen Anordnung jedoch nur entweder die beiden Farbdifferenzsignale oder das trägerfrequente Farbsignal verarbeitet werden, so wird der Wertebereich des A/D-Umsetzers 10 nicht voll genutzt, so daß das von ihm gelieferte digitale Signal nicht den bestmöglichen Rauschabstand aufweist.

## Patentansprüche

1. Schaltungsanordnung zur Analog/Digital-Umsetzung zweier Farbdifferenzsignale eines ersten Bildsignals und/oder eines auf einen Träger aufmodulierten Farbsignals eines zweiten Bildsignals,
dadurch gekennzeichnet, daß ein Multiplexer (3) vorgesehen ist, mittels dessen aus den beiden Farbdifferenzsignalen ein Zeitmultiplex-Signal generiert wird, in welchem die beiden Farbdifferenzsignale zeitlich wechselweise enthalten sind und welches in einem Addierer (5) mit dem Farbsignal zu einem Summensignal addiert wird, das einem Analog/Digital-Umsetzer (10) zugeführt wird, dem ein Trennfilter (11) zur Trennung des digitalen Zeitmultiplex-Signals von dem digitalen Farbsignal nachgeschaltet ist.

2. Schaltungsanordnung nach Anspruch 1,
dadurch gekennzeichnet, daß dem Trennfilter (11) ein Demultiplexer nachgeschaltet ist, in welchem die in dem digitalen Zeitmultiplex-Signal enthaltenen digitalen Farbdifferenzsignale getrennt werden.

3. Schaltungsanordnung nach Anspruch 1 oder 2,
dadurch gekennzeichnet, daß der Wertebereich des Analog/Digital-Umsetzers (10) so ausgelegt ist, daß alternativ nur die beiden Farbdifferenzsignale oder nur das Farbsignal umgesetzt werden kann und daß während der Zeiten, in denen eine gleichzeitige Umsetzung aller drei Signale vorgenommen werden soll, diese Signale vor der A/D-Umsetzung mit einem Faktor 0,5 und nach der A/D-Umsetzung mit einem Faktor zwei multipliziert werden.

4. Schaltungsanordnung nach Anspruch 3,
dadurch gekennzeichnet, daß das Zeitmultiplex-Signal und das Farbsignal vor deren Addition in dem Addierer (5) jeweils mit dem Faktor 0,5 multipliziert werden.

5. Schaltungsanordnung nach Anspruch 3 oder Anspruch 4,
dadurch gekennzeichnet, daß das von dem A/D-Umsetzer (10) gelieferte Signal in dem Trennfilter (11) mit dem Faktor zwei multipliziert wird.

6. Schaltungsanordnung nach einem der Ansprüche 1 bis 5,
dadurch gekennzeichnet, daß in dem Multiplexer (3) das Zeitmultiplex-Signal in der Weise generiert wird, daß während jeweils zwei aufeinanderfolgenden Abtastzeitpunkten in dem A/D-Umsetzer (10) das diesem zugeführte Summensignal dasselbe Farbdifferenzsignal enthält.

7. Schaltungsanordnung nach Anspruch 6,
dadurch gekennzeichnet, daß nur der zu dem jeweils zweiten der aufeinanderfolgenden Abtastzeitpunkte gelieferten Wertes des jeweiligen Farbdifferenzsignals im digitalen Bereich ausgewertet wird.

8. Schaltungsanordnung nach einem der Ansprüche 1 bis 7,
dadurch gekennzeichnet, daß für die Abtastwerte der beiden Farbdifferenzsignale eine Interpolation in der Weise vorgenommen wird, daß die Abtastwerte beider Farbdifferenzsignale für dieselben Zeitpunkte vorliegen.

9. Schaltungsanordnung nach einem der Ansprüche 1 bis 8,
dadurch gekennzeichnet, daß für eine Verarbeitung eines RGB-Signals dem Multiplexer einer Matrix (1) vorgeschaltet ist, welche aus dem RGB-Signal die beiden Farbdifferenzsignale und ein Helligkeitssignal gewinnt.

## Claims

1. A circuit arrangement for A/D conversion of two color difference signals of a first picture signal and/or a carrier-modulated chrominance signal of a second picture signal, characterized in that a multiplexer (3) is provided by means of which a time-division multiplex signal is generated from the two color difference signals, in which time-division multiplex signal the two color difference signals alternate in time and which is added to the chrominance signal in an adder (5) to form a sum signal which is applied to an A/D converter (10) which is followed by a separating filter (11) for separating the digital time-division multiplex signal from the digital chrominance signal.

2. A circuit arrangement as claimed in Claim 1, characterized in that the separating filter (11) is followed by a demultiplexer in which the digital color difference signals which are present in the digital time-division multiplex signal are separated.

3. A circuit arrangement as claimed in Claim 1 or 2, characterized in that the range of values of the A/D converter (10) is such that alternatively only the two color difference signals or only the chrominance signal can be converted and in that during the periods when all three signals are to be converted simultaneously these signals are multiplied by a factor of 0.5 before the A/D conversion and by a factor of two after the A/D conversion.

4. A circuit arrangement as claimed in Claim 3, characterized in that the time-division multiplex signal and the chrominance signal are multiplied by the factor of 0.5 before their addition in the adder (5).

5. A circuit arrangement as claimed in Claim 3 or 4, characterized in that the signal supplied by the A/D converter (10) is multiplied by the factor of two in the separating filter (11).

6. A circuit arrangement as claimed in any one of Claims 1 to 5, characterized in that the time-division multiplex signal is generated in the multiplexer (3) in such a way that the sum signal applied to the A/D converter (10) comprises the same color difference signal during two successive sampling instants in said converter.

7. A circuit arrangement as claimed in Claim 6, characterized in that only the value of the color difference signal supplied at the second of the successive sampling instants is evaluated in the digital domain.

8. A circuit arrangement as claimed in any one of Claims 1 to 7, characterized in that an interpolation is performed for the sampling values of the two color difference signals in such a way that the sampling values of the two color difference signals are present at the same instants.

9. A circuit arrangement as claimed in any one of Claims 1 to 8, characterized in that for processing an RGB signal the multiplexer is preceded by a matrix (1) which gains the two color difference signals and one luminance signal from the RGB signal.

## Revendications

1. Circuit pour la conversion analogique/numérique de deux signaux différentiels de couleur d'un premier signal d'image et/ou d'un signal de couleur d'un deuxième signal d'image à modulation de porteuse
caractérisé en ce qu'il est prévu un multiplexeur (3) à l'aide duquel un signal de multiplexage temporel est généré à partir des deux signaux différentiels de couleur, dans lequel les deux signaux différentiels de couleur sont contenus temporairement en alternance et qui est additionné dans un additionneur (5) au signal de couleur pour donner un signal de somme qui est amené à un convertisseur analogique/numérique (10) en aval duquel est monté un filtre séparateur (11) pour la séparation du signal numérique de multiplexage temporel par le signal de couleur numérique.

2. Circuit selon la revendication 1,
caractérisé en ce qu'un démultiplexeur est monté en aval du filtre séparateur (11), dans lequel les signaux différentiels de couleur contenus dans le signal numérique de multiplexage temporel sont séparés.

3. Circuit selon l'une des revendications 1 ou 2,
caractérisé en ce que le plage de valeurs du convertisseur analogique/numérique (10) est conçue de telle sorte que seuls les deux signaux différentiels de couleur ou seul le signal de couleur peuvent être convertis en alternance et, en ce que, pendant les périodes au cours desquelles une conversion simultanée des trois signaux doit être effectuée, ces signaux sont multipliés d'un facteur de 0,5 avant la conversion A/N et multipliés d'un facteur de 2 après la conversion A/N.

4. Circuit selon la revendication 3,
caractérisé en ce que le signal de multiplexage temporel et le signal de couleur sont multipliés par le facteur de 0,5 avant leur addition dans l'additionneur (5).

5. Circuit selon l'une des revendications 3 ou 4,
caractérisé en ce que le signal produit par le convertisseur A/N (10) est multiplié par un facteur de deux dans le filtre séparateur (11).

6. Circuit selon l'une des revendications 1 à 5,
caractérisé en ce que, dans le multiplexeur (3), le signal de multiplexage temporel est généré de telle manière que, pendant respectivement deux périodes de balayage successives dans le convertisseur A/N (10), le signal de somme qui lui est amené contient le même signal différentiel de couleur.

7. Circuit selon la revendication 6,
caractérisé en ce que seule la valeur du signal différentiel de couleur respectif produite respectivement au cours du deuxième des moments de balayage successifs est analysée dans la plage numérique.

8. Circuit selon l'une des revendications 1 à 7,
caractérisé en ce qu'une interpolation est effectuée pour les valeurs de balayage des deux signaux différentiels de couleur de telle manière que les valeurs de balayage des deux signaux différentiels de couleur soient présentes pour les mêmes moments.

9. Circuit selon l'une des revendications 1 à 8,
caractérisé en ce que, pour un traitement d'un signal RVB, une matrice (1) est montée en aval du multiplexeur et produit à partir du signal RVB les deux signaux différentiels de couleur et un signal de luminance.
